**Europäisches Patentamt**

**European Patent Office**

**Office européen des brevets**

(19)

(11) Veröffentlichungsnummer: **0 005 212**
**A1**

(12) # EUROPÄISCHE PATENTANMELDUNG

(21) Anmeldenummer: **79101184.4**

(22) Anmeldetag: **19.04.79**

(51) Int. Cl.²: **H 02 K 7/102**

(30) Priorität: **26.04.78 DE 2818277**

(43) Veröffentlichungstag der Anmeldung: **14.11.79**
Patentblatt 79/23

(84) Benannte Vertragsstaaten: **BE CH FR GB IT NL SE**

(71) Anmelder: **SEW-Eurodrive GmbH & Co. Süddeutsche Elektromotoren-Werke, Durlacher-Strasse 5-7, D-7520 Bruchsal (DE)**

(72) Erfinder: **Modrow, Dieter, Mozartweg 30, D-7520 Bruchsal (DE)**
Erfinder: **Fischer, Horst, Häuserweg 9, D-7521 Ubstadt-Weiher (DE)**

(74) Vertreter: **Lichtl, Hans, Dr. Ing. et al, Durlacher Strasse 31 Postfach 410760, D-7500 Karlsruhe 41 (Grötzingen) (DE)**

(54) **Elektrischer Bremsmotor.**

(57) Ein elektrischer Bremsmotor (1), der aus einem Ständer (2) mit einer Feldwicklung (3) und einem im stromlosen Zustand der Feldwicklung gebremsten Läufer (4) mit in Längsnuten seines Blechpakets (5) angeordneten elektrischen Leitern besteht. Der Läufer (4) weist an seinem einen Ende ein aus zumindest zwei Gussteilen bestehendes Umlenkteil (6) zum Umleiten des Ständerflusses in axiale Richtung zum Lüften der Bremse (10) auf. Das Umlenkteil (6) besitzt radial verlaufende Segmente und stirnseitig eine Ringnut (25) für einen mit den elektrischen Leitern zu verbindenden Kurzschlussring. Zur Vereinfachung der Herstellung und Montage werden sowohl die Gussteile des Umlenkteils (6) unter Ausfüllen der Spalte zwischen den Segmenten als auch der Läufer (4) unter Druck mit einer Metallegierung vergossen, welche die elektrischen Leiter und den Kurzschlussring bildet, wobei die Ringnut (25) des Umlenkteils (6) dem Läuferblechpaket (5) anliegt.

DR. ING. HANS LICHTI · DIPL.-ING. HEINER LICHTI
DIPL.-PHYS. DR. KLAUS LEUTWEIN
PATENTANWÄLTE

D-7500 KARLSRUHE 41 (GRÖTZINGEN) · DURLACHER STR. 31 (HOCHHAUS)
TELEFON (0721) 48511 · TELEX 7825986 LIPA D

SEW Eurodrive GmbH & Co. Süddeutsche Elektromotore-Werke,
7520 Bruchsal

Elektrischer Bremsmotor

Die Erfindung betrifft einen elektrischen Bremsmotor,
bestehend aus einem Ständer mit einer ein elektromagnetisches Feld erzeugenden Feldwicklung und einem im stromlosen Zustand der Feldwicklung gebremsten Läufer mit in
Längsnuten des elektrisch nichtleitenden Läuferblechpakets
angeordneten elektrischen Leitern, wobei der Läufer an
seinem einen Ende mit einem aus zumindest zwei Gußteilen
bestehenden Umlenkteil zum Umlenken des Ständerflusses in
axiale Richtung zum Lüften der Bremse versehen ist, das
radial verlaufende Segmente und an einer Stirnseite eine
Ringnut für einen mit den elektrischen Leitern zu verbindenen Kurzschlußring aufweist.

- 2 -

Ein solcher Bremsmotor ist bekannt (DE-AS 11 80 040).
Dieser weist einen Läufer mit in dessen Längsnuten eingegossenen Leiterstäben auf, die bis zu dem an seinem
einen Ende angeordneten Umlenkteil reichen. Dieses Umlenkteil besteht aus zwei im Verbundguß hergestellten Gußteilen, wobei das innere Teil aus einem unmagnetischen und
das äußere Guß-Teil aus einem magnetischen Werkstoff besteht.
Die Ringnut zur Aufnahme des Kurzschlußrings ist an der
freien Stirnseite des Umlenkteils angeordnet; dessen
Durchbrüche von den in den Längsnuten des Läufers eingegossenen Leiterstäben durchgriffen sind. Diese sind mit
dem Kurzschlußring verbunden.

Bei diesem bekannten Bremsmotor wird ein Teil des Ständerflusses mittels des Umlenkteils in axiale Richtung
umgelenkt, wobei der an einer Stirnseite des Umlenkteils
austretende magnetische Fluß ein längs der Läuferachse
axial verschiebbares Bremselement entgegen einer Federkraft anzieht, so daß dieses Bremselement von dem Ständergehäuse freikommt und dabei die Bremse gelüftet wird. Beim
Ausschalten des Bremsmotors ist kein Ständerfluß mehr vorhanden, der, umgelenkt, auf das Bremselement einwirken könnte,
so daß dieses aufgrund der Federkraft in axialer Richtung
verschoben wird, wobei die Bremswirkung einsetzt.

Von Nachteil bei diesem bekannten Bremsmotor ist jedoch
die relativ aufwendige Herstellung des Rotors insgesamt,
insbesondere aber des Umlenkteils. So werden zunächst in
den Längsnuten des Läufers die Leiterstäbe eingegossen.
Danach muß zunächst ein Gußteil des Umlenkteils, beispielsweise das aus dem nicht magnetisierbaren Werkstoff gegossen werden, das dann in eine besondere Form eingelegt

- 3 -

wird, die anschließend mit einem flüssigen, magnetisierbaren Werkstoff ausgefüllt wird. Nach dem Erkalten ist
es ferner erforderlich, daß das gesondert hergestellte Umlenkteil mit dem Läufer montiert wird, wobei noch ein Kurzschlußring in die Ringnut eingelegt werden muß, der elektrisch mit den Leiterstäben zu verbinden ist. Die Herstellung des Läufers mit dem Umlenkteil ist demnach arbeits-
und damit in nicht erwünschter Weise kostenaufwendig.

Der Erfindung liegt die Aufgabe zugrunde, bei einem Bremsmotor der eingangs angegebenen Art die Herstellung des Läufers
mit dem Umlenkteil mit weniger Einzelteilen und in weniger
Arbeitsgängen einfacher und damit kostengünstiger zu gestalten.

Diese Aufgabe wird erfindungsgemäß dadurch gelöst, daß die
Ringnut dem Läuferblechpaket anliegt und daß die Gußteile
des Umlenkteils und der Läufer mittels einer dessen elektrischen Leiter und den Kurzschlußring bildenden Metallegierung, die die Spalten zwischen den Segmenten des Umlenkteils füllt, unter Druck miteinander vergossen sind. Zwekmäßig ist die Metallegierung, wie ansich bekannt, eine Aluminiumlegierung, und bestehen die Gußteile des Umlenkteils
aus einem magnetischweichen Werkstoff.

Diese Ausbildung vermittelt den Vorteil, daß die gesondert
hergestellten Gußteile des Umlenkteils in einfacher Weise
auf den Läufer lose aufgesteckt werden können, Diese werden
dann beispielsweise im Aluminiumdruckgießverfahren, infolge des
in die Spalten zwischen den Segmenten einfließenden Aluminiums

- 4 -

- 4 -

untereinander und zugleich mit dem Läufer fest verbunden, indem das Aluminium in die Längsnuten des Läufers und in die diesem anliegende Ringnut der das Umlenkteil bildenden Gußteile gepreßt wird und beim Erkalten eine kraftschlüssige Verbindung zwischen dem Umlenkteil und dem Läufer bewirkt. So wird der zuvor entsprechend vorbereitete Läufer mit den gesondert hergestellten Gußteilen des Umlenkteils in einem einzigen Arbeitsgang, dem Aluminiumdruckgießen, funktionsfertig und damit einfach und billig erhalten.

Besonders einfach gestaltet sich das Aufstecken der einzelnen Gußteile zur Bildung des Umlenkteils auf die Achse des Läufers, wenn die Gußteile als in ihrer Form einander angepaßte Steckteile ausgebildet sind, so daß sie gegen Verdrehung gesichert und damit in einfacher Weise, auch von ungelernten Arbeitskräften auf die Achse des Läufers aufgeschoben werden können.

Zweckmäßig besteht das Umlenkteil aus zwei Gußteilen gleichen Durchmessers und gleicher Dicke, von denen jedes dieselbe Anzahl von - vorzugsweise elf Segmenten aufweist, wobei jedes Gußteil in bevorzugter Ausführungsform ebene und bezüglich der Läuferachsen senkrechte Stirnseiten aufweist, und einander gegenüberliegende Seiten der Segmente als im wesentlichen radial verlaufende ebene Flächen ausgebildet sind.

Zur leichteren Entformung des Gußteils und zum einfacheren Aufstecken der als Steckteil ausgebildeten Gußteile des Umlenkteils verjüngt sich vorzugsweise jedes Segment bezüglich derselben Richtung der Läuferachse, wobei alle Segmente

- 5 -

der Gußstücke im wesentlichen gleich groß sind.

Gemäß einer bevorzugten Ausführungsform der Erfindung ist jedes Segment des einen Gußteils in der von zwei Segmenten gebildeten Lücke des anderen Gußteils angeordn‒et, wobei zweckmäßig jedes Segment zur Bildung der Spalten des Umlenkteils etwas schmaler als jede Lücke zwischen den Segmenten ausgebildet ist. Somit können praktisch beliebig dünne Spalten zwischen den Segmenten des Umlenkteils im Gegensatz zum Stand der Technik hergestellt werden, bei dem die Lamellen des einen Gußteils aus eine magnetisierbaren Werkstoff voneinander mittels Rippen des anderen Gußteils aus einem nicht magnetisierbaren Werkstoff getrennt sind. Das letztgenannte Gußteil übernimmt hierbei eine Trägerfunktion für das andere Gußteil, so daß bei dessen Rippen eine bestimmte Wandstärke aus Gründen der mechanischen Festigkeit gegenüber den beim Betrieb auftretenden Kräften nicht unterschritten werden darf. Erfindungsgemäß können die Spalten demgegenüber nur so breit ausgebildet sein, daß sich der magnetische Fluß nicht darüber schließt. Zugleich wird hiermit der weitere Vorteil erreicht, daß eine recht große Eintritts- und Austrittsfläche für den in axiale Richtung umgelenkten Ständerfluß erhalten wird.

Die Breite der Spalten kann einfach dadurch justiert werden, daß an zumindest einer der Radialebenen jedes Gußstücks eine Nase angeordnet ist, die das Maß für die Breite der Spalten, vorgibt.

- 6 -

Es ist ferner beim Druckgießen von Vorteil, wenn in den Radialebenen jedes Sements Vertiefungen angebracht sind, die als parallel zur Längsachse verlaufende Kanäle ausgebildet sein können, wobei zweckmäßig je zwei Kanäle in einem Spalt des Umlenkteils einander gegenüberliegen. Bei dieser Ausbildung ist sichergestellt, daß das Aluminium beim Gießen in jeden Spalt gelangt und diesen völlig ausfüllt.

Zweckmäßig weist jedes Gußteil einen die Läuferachse mittels einen Durchgangslochs von kreisförmigen Querschnitt umgreifenden Ring auf, von dem sich die Segmente in radialer Richtung erstrecken, wobei der Ring magnetisch hart ist, um zu vermeiden, daß der Ständerfluß in dem Umlenkteil sich nicht über diesen Ring schließt, sondern in axiale Richtung umgelenkt wird.

Besonders einfach gestalten sich die Steckteile, wenn jedes Durchgangsloch der Ringe des Umlenkteils auf einander entgegengesetzten Stirnseiten einen Absatz mit einem größeren Durchmesser als der Außendurchmesser des Rings zum Aufeinanderstecken der beiden das Umlenkteil bildenden Gußteile aufweist. Diese Ausbildung der Gußteile erlaubt, daß sie im aufeinandergesteckten Zustand konzentrisch zueinander gehalten sind und solchermaßen einfach auf die Achse des Läufers aufgeschoben werden können. Hierbei sollte die Länge in axialer Richtung des Absatzes mit größerem Durchmesser des einen Gußteils der Länge jenem Teil des Durchgangslochs mit den kleineren Durchmesser des anderen Gußteils entsprechen.

- 7 -

Weitere Merkmale, Einzelheiten und Vorteile der Erfindung
ergeben sich aus der nachfolgenden Beschreibung einer in
der Zeichnung dargestellten beovzugten Ausführungsform.
Es zeigen:

Figur 1 . einen elektrischen Bremsmotor in schematischem Längsschnitt;

Figur 2 ein Gußteil für ein Umlenkteil, in Stirnansicht;

Figur 3 einen Schnitt III-III, gemäß Figur 2;

Figur 4 eine Ansicht IV-IV, gemäß Figur 3;

Figur 5 ein zweites Gußteil für das Umlenkteil des
Motors;

Figur 6 einen Schnitt VI-VI, gemäß Figur 5;

Figur 7 eine Ansicht VII-VII, gemäß Figur 6;

Figur 8 eine Ansicht VIII-VIII, gemäß Figur 7.

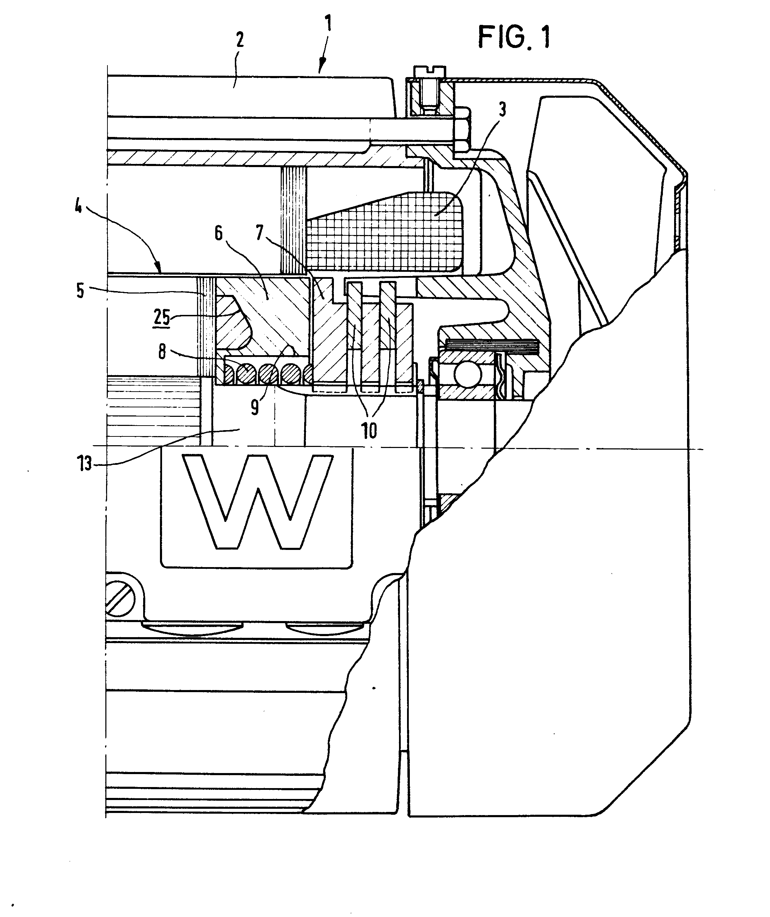

In Figur 1 ist der elektrische Bremsmotor insgesamt mit 1
bezeichnet. Er weist in einem Ständer 2 eine Feldwicklung 3
zur Erzeugung eines Ständerfeldes auf, das über die elektromagnetische Induktion mit dem insgesamt mit 4 bezeichneten
Läufer in Wechselwirkung steht.

- 8 -

Der Läufer 4 weist ein in der Zeichnung schematisch angedeutetes Läuferblechpaket 5 auf, in welchem (in der Zeichnung nicht dargestellte) Längsnuten für elektrische Leiter
angeordnet sind. An dem einen Ende des Läufers 4 ist ein
Umlenkteil 6 zur Umlenkung des Ständerflusses-in axiale
Richtung angeordnet. In einer Ausnehmung 9 des Umlenkteils 6
ist eine Feder 8 angeordnet, die einer gegen Verdrehung gesicherten Ankerscheibe 7 anliegt. Die Ankerscheibe 7 wirkt
mit umfangsseitig am Gehäuse geführten Bremsscheiben 10 zusammen, Beim vorhandenen Ständerfeld wird die Ankerscheibe 7 aufgrund der Kraft der Feder 8 gegen die Bremsscheiben 10 bewegt,
wodurch der Läufer 4 gebremst ist. Beim Einschalten des Motors
wird die Ankerscheibe 7 von dem Umlenkteil 6 gegen die Kraft
der Feder 8 angezogen, so daß sie von den Bremsscheiben 10
freikommt, womit die Bremse gelüftet ist.

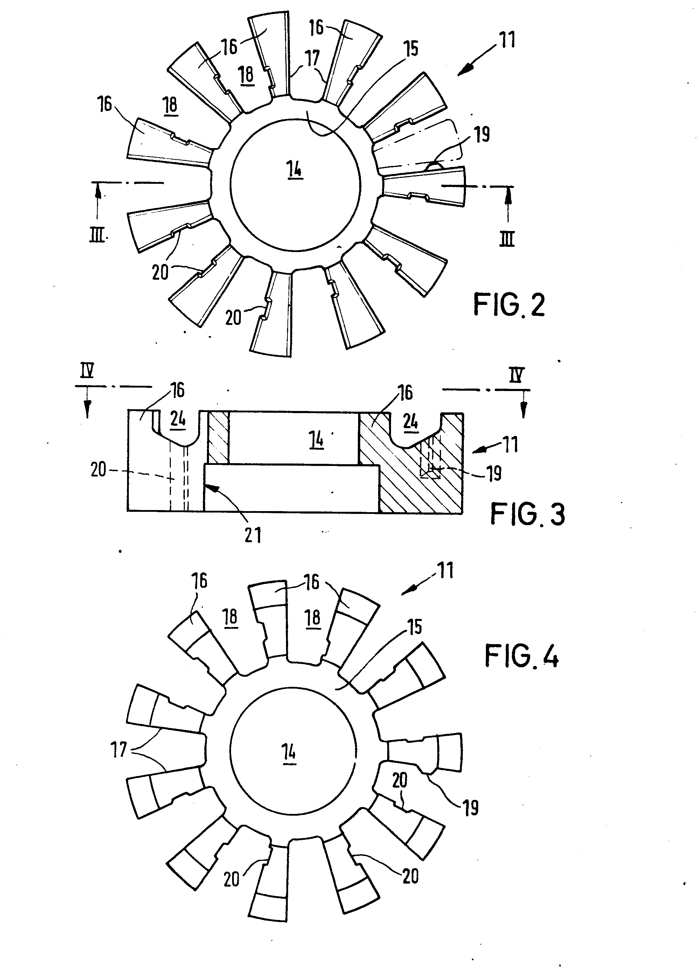

Die das Umlenkteil 7 bildenden, als Steckteile ausgebildeten
beiden Gußteile 11, 12 sind in den Figuren 2-8 näher dargestellt. Die beiden Gußteile 11, 12 weisen einen gleichen
Außendurchmesser und gleiche Anzahl, nämlich elf gleichmäßig an ihrem Umfang verteilte, im wesentlichen gleichgroße Segmente 16 auf. Die Gußteile, 11,12 sind ferner mit
einem die Achse 13 des Läufers (Figur 1) mittels eines
Durchgangslochs 14 von kreisförmigen Querschnitt umgreifenden Ring 15 versehen, von dem sich die Segmente 16 in
radialer Richtung erstrecken, die ebene, bezüglich der
Achse 13 des Läufers senkrechte Stirnseiten aufweisen.

- 9 -

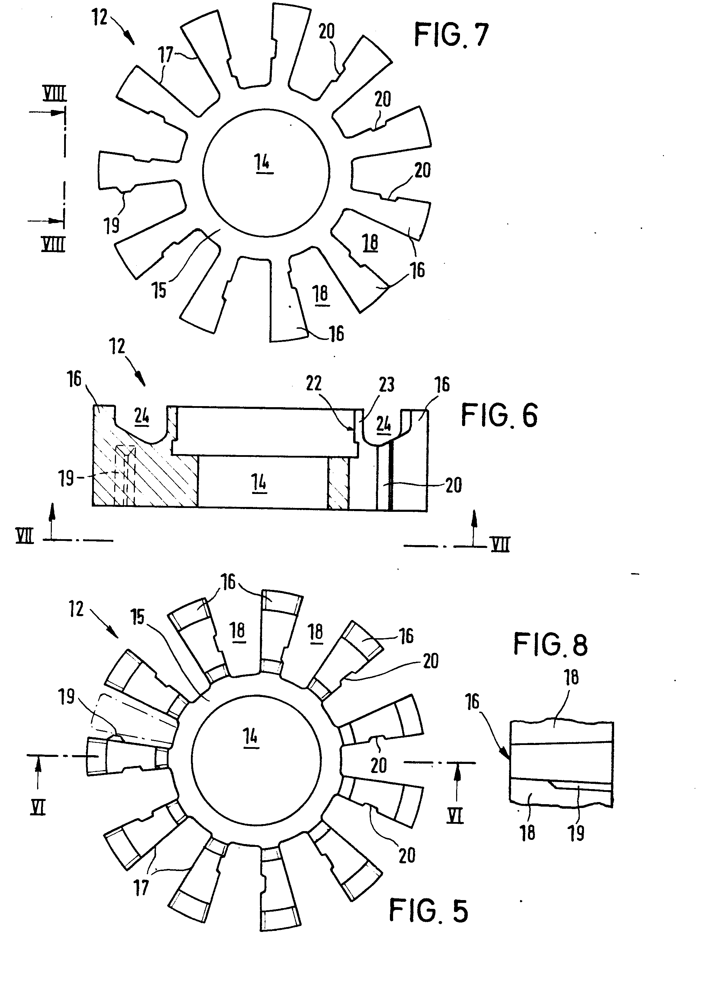

Einander gegenüberliegende Seiten der Segmente 16 sind.
als im wesentlichen sich radial erstreckende ebene Flächen 17 ausgebildet. Jedes Segment 16 eines Gußkörpers 11 bzw. 12 verjüngt sich jedoch bezüglich derselben Richtung der Achse 13 des Läufers 4 (vgl. Figur 8). Die Segment 16 sind am Umfang des Rings 15 derart mit Abstand voneinander angeordnet, daß der Querschnitt der zwischen je zwei benachbarten Segmenten vorhandenen Lücken 18 etwas größer als jener der Segmente 16 ist. Ferner ist an mindestens einer Radialfläche 17 jedes Gußteils 11, 12 eine Nase 19 und in zumindest einer Radialebene 17 jedes Segments 16 eine als Kanal 20 ausgebildete und parallel zur Achse 13 des Läufers 4 verlaufende Vertiefung angeordnet.

Aufgrund dieser Ausbildung und Anordnung der Segmente 16 ist es möglich, daß die beiden Gußteile 11, 12 aufeinandergesteckt werden können, so daß jedes Segment 16 des einen Gußteils 11 in der Lücke 18 des anderen Gußteils (12) angeordnet ist. Die Nase 19 dient hierbei als Abstandhalter so daß zwischen den einzelnen Segmenten des aus den Gußteilen 11, 12 zusammengesteckten Umlenkteils 6 etwa gleich große Spalten entstehen. Die Kanäle 20 sind hierbei derart angeordnet, daß je 2 Kanäle in einem Spalt des zusammengesteckten Umlenkteils 6 einander gegenüberliegen.

Damit die Gußteile 11, 12 aufeinander steckbar sind, weist jedes deren Durchgangslöcher 14 auf einander entgegengesetzten Seiten einen Absatz 21 bzw. 22 mit einem größeren Durchmesser als der Außendurchmesser des Rings 15 auf. Somit können die Gußteile 12, 11 , losgelöst von der Achse 13 des Läufers 4 aufeinandergesteckt und konzentrisch zueinander gehalten werden, weil die den Absatz begrenzenden Stege 23 des Gußteils 12 den Ring 15 des Gußteils 11 in dessen Lücken 18 übergreifen. Die Absätze 21 bzw. 22 dienen zugleich als Anschläge, so daß die beiden Gußteile 11, 12 die dieselbe Dicke aufweisen, nur soweit ineinandergesteckt werden können, daß jede der beiden Stirnseiten in derselben Ebene zu liegen kommt. Hierzu muß die Länge in axialer Richtung des Absatzes 21 bzw. 22 mit dem größeren Durchmesser an dem einen Gußteil 11 bzw. 12 der Länge jenes Teils des Durchgangslochs 14 mit dem kleineren Durchmesser an dem anderen Gußteil 12 bzw. 11 entsprechen.

An einer Stirnseite weist jedes Segment 16 eine Nut 24 auf, die die Ringnut 25 des Umlenkteils 6 bilden (vgl. Figur 1).

DR. ING. HANS LICHTI · DIPL.-ING. HEINER LICHTI
DIPL.-PHYS. DR. KLAUS LEUTWEIN
PATENTANWÄLTE

D-7500 KARLSRUHE 41 (GRÖTZINGEN) · DURLACHER STR. 31 (HOCHHAUS)
TELEFON (0721) 48511 · TELEX 7825986 LIPA D

4873/79 Lj

SEW Eurodrive GmbH & Co. Süddeutsche Elektromotorenwerke
7520 Bruchsal

## Patentansprüche

1. Elektrischer Bremsmotor, bestehend aus einem Ständer mit einer ein elektromagnetisches Feld erzeugenden Feldwicklung und einem im stromlosen Zustand der Feldwicklung gebremsten Läufer mit in Längsnuten des elektrisch nichtleitenden Läuferblechpakets angeordneten elektrischen Leitern, wobei der Läufer an seinem einen Ende mit einem aus zumindest zwei Gußteilen bestehenden Umlenkteil zum Umleiten des Ständerflusses in axiale Richtung zum Lüften der Bremse versehen ist, das radial verlaufende Segmente und an einer Stirnseite eine Ringnut für einen mit den elektrischen Leitern zu verbindenden Kurzschlußring aufweist, dadurch gekennzeichnet, daß die Ringnut (25) dem Läuferblechpaket (5) anliegt und daß die Gußteile (11,12) des Umlenkteils 16) und der Läufer (4) mittels einer dessen elektrische Leiter und den Kurzschlußring bildenden Metallegierung, die die

- 2 -

Spalten zwischen den Segmenten (16) des Umlenkteils (6)
füllt, unter Druck miteinander·vergossen sind.

2. Motor nach Anspruch 1, dadurch gekennzeichnet, daß
die Metallegierung, wie ansich bekannt, eine Aluminiumlegierung ist.

3. Motor nach Anspruch 1 und 2, dadurch gekennzeichnet,
daß die Gußteile (11,12) des Umlenkteils (6) aus einem
magnetisch weichem Werkstoff bestehen.

4. Motor nach einem der Ansprüche 1 bis 3, dadurch gekennzeichnet, daß die einzelnen Gußteile (11, 12) zur
Bildung des Umlenkteils (6) als in ihrer Form einander
angepaßte Steckteile ausgebildet sind.

5. Motor nach einem der Ansprüche 1 bis 4, dadurch gekennzeichnet, daß das Umlenkteil (6) aus zwei Gußteilen (11,12)
gleichen Durchmessers und gleicher Dicke besteht, von denen
jedes dieselbe Anzahl von Segmenten (16) aufweist.

6. Motor nach Anspruch 5, dadurch gekennzeichnet, daß jedes
Gußteil (11, 12) elf mit Abstand voneinander angeordnete
Segmente (16) aufweist.

7. Motor nach einem der Ansprüche 1 bis 6, dadurch gekennzeichnet, daß jedes Gußteil (11,12) ebene und bezüglich der
Achse (13) des Läufers (4) senkrechte Stirnseiten aufweist.

8. Motor nach einem der Ansprüche 1 bis 7, dadurch gekennzeichnet, daß einander ggenüberliegende Seiten
(17) der Segmente (16) als im wesentlichen radial
verlaufende ebene Flächen ausgebildet sind.

9. Motor nach Anspruch 8, dadurch gekennzeichnet, daß
sich jedes Segment (16) bezüglich derselben Richtung
der Achse (13) des Läufers (4) verjüngt.

10. Motor nach einem der Ansprüche 1 bis 9, dadurch gekennzeichnet, daß alle Segmente (16) der Gußstücke (11,12)
im wesentlichen gleich groß sind.

11. Motor nach einem der Ansprüche 1 bis 10, dadurch gekennzeichnet, daß jedes Segment (16) des einen Gußteils
(11,12) in der von zwei benachbarten Segmenten (16) gebildeten Lücke (18) des anderen Gußteils (11,12) angeordnet ist.

12. Motor nach Anspruch 11, dadurch gekennzeichnet, daß
jedes Segment (16) zur Bildung der Spalten des Umlenkteils (6) etwas schmaler als jede Lücke (18) zwischen
den Segmenten (16) ist.

13. Motor nach einem der Ansprüche 8 bis 12, dadurch gekennzeichnet, daß an zumindest einer der Radialebenen
(17) jedes Gußstücks (11,12) eine Nase (19) angeordnet
ist.

14. Motor nach einem der Ansprüche 8 bis 13, dadurch gekennzeichnet, daß in zumindest einer Radialebene (17) jedes Segments (16) Vertiefungen angebracht sind.

15. Motor nach Anspruch 14, dadurch gekennzeichnet, daß die Vertiefungen als parallel zur Achse (13) des Läufers (4) verlaufende Kanäle (20) ausgebildet sind.

16. Motor nach Anspruch 15, dadurch gekennzeichnet, daß je zwei Kanäle (20) in einem Spalt des Umlenkteils (6) einander gegenüberliegen.

17. Motor nach einem der Ansprüche 1 bis 16, dadurch gekennzeichnet, daß jedes Gußteil (11, 12) einen die Achse (13) des Läufers (4) mittels eines Durchgangslochs (14) von kreisförmigen Querschnitt umgreifenden Ring (15) aufweist, von dem sich die Segmente (16) in radialer Richtung erstrecken.

18. Motor nach Anspruch 17, dadurch gekennzeichnet, daß der Ring (15) magnetisch hart ausgebildet ist.

19. Motor nach Anspruch 17 oder 18, dadurch gekennzeichnet, daß jedes Durchgangsloch (14) der beiden Ringe (15), des Umlenkteils (6) auf einander entgegengesetzten Seiten einen Absatz (21, 22) mit einem größeren Durchmesser als der Außendurchmesser des Rings (15) zum Aufeinanderstecken der beiden das Umlenkreil (6) bildenden Gußteile (11, 12) aufweist.

20. Motor nach Anspruch 19, dadurch gekennzeichnet, daß die Länge in axialer Richtung des Absatzes (21, 22) mit dem größeren Durchmesser des einen Gußteils (11,12) der Länge jenes Teils des Durchgangslochs(14) mit dem kleineren Durchmesser des anderen Gußteils (12,11) entspricht.

21. Motor nach einem der Ansprüche 1 bis 20, dadurch gekennzeichnet, daß jedes Segment (16) auf einer Stirnseite eine die Ringnut (25) des Umlenkteils (6) bildende Nut (24) aufweist.

22. Motor nach einem der Ansprüche 1 bis 21, dadurch gekennzeichnet, daß das Durchgangsloch (14) einen Absatz (9) zur Aufnahme einer Feder (8) aufweist.

FIG. 1

2/3

FIG. 2

FIG. 3

FIG. 4

FIG. 7

FIG. 6

FIG. 8

FIG. 5

Europäisches
Patentamt

**EUROPÄISCHER RECHERCHENBERICHT**

EP 79 10 1184

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | FR - A - 1 532 298 (MOTEURS LEROY)<br><br>* Seite 2, linke Spalte, Zeilen 9-20; Seite 2, rechte Spalte, Zeilen 26-61; Seite 3, linke Spalte, Zeilen 1-36; Figuren 1-7 *<br><br>-- | 1-3,7, 8,10, 12,17, 21,22 | H 02 K 7/102 |
| | FR - A - 1 575 723 (HANNING ELEK-TROWERKE)<br><br>* Seite 2, Zeilen 13-23; Seite 3, Zeilen 2-6; Figuren 1-3, 5 *<br><br>-- | 1-3,7, 8,17, 22 | RECHERCHIERTE SACHGEBIETE (Int. Cl.²)<br><br>H 02 K 7/102<br>7/112<br>17/32<br>15/00 |
| | FR - A - 2 133 197 (AGALAKOV et al.)<br><br>* Seite 2, Zeilen 34-40; Seite 3, Zeilen 11-31; Seite 4, Zeilen 12-17; Figuren 1-6 *<br><br>-- | 2,3, 13-16, 22 | |
| | DE - B - 1 121 716 (SIEMENS-SCHUCKERT)<br><br>* Spalte 1, Zeilen 24-52; Spalte 2, Zeilen 20-37; Figur 1 *<br><br>---- | 4-6, 10-12 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 07-06-1979 | TIO |

EPA form 1503.1 06.78